Europäisches Patentamt

European Patent Office

Office européen des brevets

(11) Numéro de publication : **0 597 762 A1**

(19)

# (12) DEMANDE DE BREVET EUROPEEN

(21) Numéro de dépôt : **93402728.5**

(22) Date de dépôt : **05.11.93**

(51) Int. Cl.⁵ : $G06F\ 15/70$

(30) Priorité : **09.11.92 FR 9213470**

(43) Date de publication de la demande :
**18.05.94 Bulletin 94/20**

(84) Etats contractants désignés :
**DE GB IT NL**

(71) Demandeur : **COMMISSARIAT A L'ENERGIE ATOMIQUE**
**31-33, rue de la Fédération**
**F-75015 Paris (FR)**

(72) Inventeur : **Lionti, Rosolino**
**10, Impasse Saint Ange**
**F-38180 Seyssins (FR)**
Inventeur : **Darboux, Michel**
**17, rue Aimé Berey**
**F-3800 Grenoble (FR)**

(74) Mandataire : **Dubois-Chabert, Guy et al**
**Société de Protection des Inventions 25, rue de Ponthieu**
**F-75008 Paris (FR)**

(54) **Procédé de réalisation d'une image de référence synthétisée pour l'inspection d'objets.**

(57)    A partir d'une image descriptive de l'objet à inspecter, on effectue les opérations suivantes : détermination (110), dans l'image descriptive, d'éléments caractéristiques de l'objet ; détermination (204) des coordonnées des éléments caractéristiques dans l'image descriptive ; acquisition (202) d'au moins une image réelle de l'objet définie dans un second format relatif à la prise de vues ; prélèvement (224), sur l'image réelle de l'objet, d'échantillons contenant chacun l'image réelle d'au moins un élément caractéristique ; centrage (226) des échantillons ; positionnement (300) des échantillons sur l'image descriptive.

Application à l'inspection des circuits intégrés.

FIG. 2

EP 0 597 762 A1

La présente invention concerne un procédé permettant de réaliser une image de synthèse utilisée, lors de la comparaison d'images, comme image de référence.

Elle s'applique notamment au domaine de l'inspection industrielle où l'on cherche à contrôler un objet par comparaison de l'image dudit objet avec une image de référence synthétisée.

De façon plus particulière, cette invention peut être appliquée à la vérification de circuits intégrés fabriqués à partir d'une chaîne de fabrication industrielle.

Il est connu de détecter les défauts éventuels des objets industriels, et plus particulièrement des circuits intégrés, en utilisant des procédés de comparaison implantés dans des machines de vision. Dans ces procédés, l'une des images est issue de la réalité et représente l'objet à inspecter, tandis que l'autre image, dite de référence, correspond à un objet parfait exempt de défaut. Dans certaines applications connues, cette image de référence représentant un objet parfait est construite à partir d'informations issues d'une base de données de conception assistée par ordinateur (base de données de C.A.O.). Il s'agit alors d'une image de synthèse, de type binaire. Cependant, l'image binaire de conception ainsi obtenue à partir des données de conception n'est pas toujours suffisamment précise par rapport à la réalité, en particulier en ce qui concerne les arrondis, les courbures et les contrastes lumineux existant dans la réalité.

Afin de rendre ces images plus "réalistes", il est possible de mettre en oeuvre un procédé fondé sur un filtrage de l'image de conception obtenue à partir des données de C.A.O. Ce filtrage permet, notamment, d'arrondir les angles pour rendre ladite image plus réaliste et plus proche de l'image de l'objet à contrôler. Un tel procédé reste cependant limité dans sa précision.

Un tel procédé est décrit dans l'article "Advanced 5X reticle inspection technologies for U.L.S.I. devices", publié par Mrs TAKEUCHI, JOSEPH, YOSHIDA, MORIIZUMI, PARKER et WATAKABE dans la revue S.P.I.E., vol. n° 1 261 (1990).

Un procédé de génération d'une scène graphique nouvelle par remplacement de certains motifs graphiques est décrit dans le document EP-A-0 354 031. Ce procédé consiste à effectuer une première étape de choix des motifs graphiques qui devront être recherchés, puis une seconde étape de recherche, dans la scène graphique, de toutes les occurrences des motifs graphiques choisis précédemment, enfin, en une troisième étape, de remplacement, dans la scène graphique, de ces motifs graphiques par d'autres motifs provenant généralement d'une bibliothèque.

Un tel procédé ne peut être appliqué à la génération d'images destinées à servir de référence lors d'une inspection par comparaison d'objets tels que les circuits intégrés. En effet, la comparaison de telles images avec des images d'objets réels n'est pas suffisamment précise pour détecter les très petits défauts des objets à inspecter. Le procédé décrit précédemment ne permet donc pas de générer une image de référence suffisamment proche d'une image réelle pour ne présenter aucune discontinuité, notamment, dans les variations de niveaux de gris de l'image.

La présente invention a justement pour but de remédier aux inconvénients des procédés connus. A cet effet, elle propose un procédé permettant de remplacer, sur une image binaire issue d'une base de données C.A.O., les éléments caractéristiques de l'objet (ou motifs graphiques) par des images réelles de ces éléments caractéristiques.

De façon plus précise, l'invention concerne un procédé de réalisation d'une image de référence synthétisée à l'aide de moyens de traitements d'images et de moyens de prise de vues. Ce procédé est caractérisé en ce qu'il consiste, à partir d'une image descriptive d'un objet à inspecter contenue dans les moyens de traitement et définie dans un premier format relatif aux moyens de traitement, à effectuer les opérations suivantes :

a) détermination, dans l'image descriptive, d'éléments caractéristiques de l'objet ;

b) détermination des coordonnées des éléments caractéristiques dans l'image descriptive ;

c) acquisition, à l'aide des moyens de prise de vues, d'au moins une image réelle de l'objet définie dans un second format relatif auxdits moyens de prise de vues ;

d) prélèvement, sur l'image réelle de l'objet, d'échantillons contenant chacun l'image réelle d'au moins un élément caractéristique ;

e) changement de format pour transformer l'image descriptive de l'objet et les coordonnées des éléments caractéristiques définies dans le premier format en une image descriptive équivalente et des coordonnées équivalentes des éléments caractéristiques définies dans le second format ;

f) centrage des échantillons en fonction des coordonnées équivalentes obtenue lors de l'opération e) de changement de format ;

g) positionnement des échantillons ainsi centrés sur l'image descriptive équivalente donnée dans le second format.

Avantageusement, ce procédé comporte en outre une opération de décalage global réalisée après l'opération e) de changement de format et consistant à déterminer une valeur de décalage global de l'image réelle de l'objet par rapport à l'image descriptive équivalente, par application d'une corrélation entre lesdites images réelle et descriptive équivalente.

L'opération e) de changement de format peut consister à déduire des coordonnées équivalentes des éléments caractéristiques obtenues lors de l'opération e) de changement de format, des valeurs entières de coordonnées et des valeurs fractionnaires de décalage local.

L'opération d) de prélèvement d'échantillons peut consister tout d'abord à choisir les échantillons dont les coordonnées dans l'image réelle de l'objet correspondent aux valeurs entières de coordonnées obtenues lors de l'opération e) de changement de format.

Le procédé selon l'invention peut comporter, après l'opération f) de centrage des échantillons, une opération de décalage consistant à décaler les échantillons centrés selon une pluralité de valeurs prédéfinies. Cette opération de décalage peut consister à établir une bibliothèque d'échantillons centrés et prédécalés, les échantillons à positionner sur l'image descriptive équivalente étant choisis dans ladite bibliothèque.

Selon un mode de réalisation de l'invention, l'opération e) de changement de format consiste à convertir l'image descriptive de l'objet et les coordonnées des éléments caractéristiques du premier format dans le second format à l'aide d'une table de conversion.

Selon un autre mode de réalisation de l'invention, le procédé comporte , entre l'opération c) d'acquisition de l'image réelle de l'objet et l'opération e) de changement de format, une opération de réalisation d'une image de niveaux de gris, cette image de niveaux de gris étant définie dans le premier format et obtenue en introduisant, dans l'image descriptive de l'objet, des niveaux de gris lus sur l'image réelle de l'objet.

Les caractéristiques et avantages de l'invention apparaîtront mieux au cours de la description qui va suivre donnée, à titre illustratif, mais nullement limitatif, en référence aux dessins annexés dans lesquels :

- la figure 1 est un organigramme représentant les différentes opérations effectuées pour mettre en oeuvre le procédé de l'invention ;
- la figure 2 est un organigramme représentant, de façon plus détaillée, l'étape de prélèvement et de traitement des échantillons de la figure 1 ;
- les figures 3A et 3B sont des organigrammes représentant, respectivement, les étapes de lecture et de traitement d'un échantillon caractéristique dans une liste de types et les applications successives de ces étapes pour les différentes listes de types ;
- la figure 4 est une représentation d'éléments caractéristiques recherchés dans l'image descriptive de l'objet (c'est-à-dire dans l'image binaire) lors de l'opération b) de détermination des coordonnées desdits éléments caractéristiques ;
- la figure 5 est une représentation du positionnement d'éléments caractéristiques, tels que des transitions et des coins lors de l'opération g) de positionnement ;
- la figure 6 est un exemple de réalisation d'une image de référence selon le procédé de l'invention.

Dans toute la description qui va suivre, on prendra, comme exemple de mise en oeuvre de l'invention, la vérification de circuits intégrés sur plaquettes ("wafer", en anglais). Il va de soi qu'il pourrait s'agir d'autres objets ou, simplement, de portions de circuits intégrés. En effet, le procédé peut être mis en oeuvre pour une portion de circuit intégré et répété autant de fois qu'il y a de portions (appelées aussi "champs") à inspecter dans le circuit intégré à inspecter.

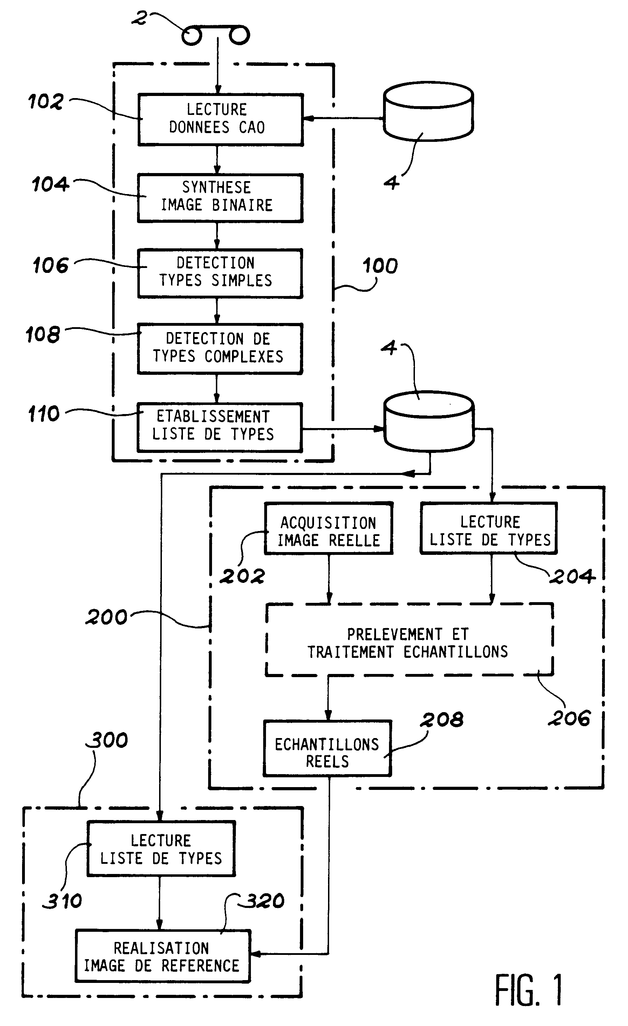

Sur la figure 1, on a représenté l'organigramme décrivant les différentes opérations effectuées lors de la mise en oeuvre du procédé selon l'invention.

Ce procédé de réalisation d'une image de référence synthétisée peut être décomposé en trois phases de traitement des données d'images :
- une phase 100 de prétraitement des données de C.A.O.
- une phase 200 de traitement des éléments caractéristiques ;
- une phase 300 de synthèse.

De façon plus précise, la phase 100 de prétraitement des données de C.A.O. consiste essentiellement à traduire les données de C.A.O. en des images binaires, appelées aussi images descriptives de l'objet à inspecter. En effet, les données de C.A.O. sont des données "compactes", c'est-à-dire que chaque élément caractéristique contenu dans la base de données C.A.O. n'est décrit qu'une seule fois dans ladite base de données, quel que soit le nombre de fois où il est présent dans le circuit intégré. Ces données de C.A.O. sont donc retraduites sous forme d'image binaire, où les éléments apparaissent autant de fois qu'ils sont réellement présents sur le circuit intégré. Cette image binaire a l'avantage de représenter un champ du circuit intégré sur un écran de visualisation.

Ainsi, la phase 100 de prétraitement comprend une première étape 102 de lecture, dans la base de données C.A.O., des données décrivant le circuit et contenues dans une mémoire de masse telle qu'une bande magnétique 2 et des éventuelles informations déjà connues et stockées par exemple dans le disque dur 4.

Ces données de C.A.O. sont avantageusement retraduites, c'est-à-dire transformées, lors de l'étape 104 de synthèse de l'image binaire, sous forme d'une image binaire afin de faciliter les traitements ultérieurs. La résolution de cette image binaire, obtenue à l'étape 104, est la même que celle de la base de données de C.A.O. En effet, pour limiter la perte d'informations pouvant survenir lors de ce genre de transformation, on synthétise cette image binaire dans la maille de C.A.O. correspondant au système de description du circuit intégré.

On comprendra par "maille de C.A.O.", les pas d'échantillonnage respectifs selon les deux directions du plan contenant l'image. Cette maille de C.A.O.

peut être, par exemple, égale à 0,1 μm x 0,1 μm ou, à 0,05 μm x 0,0 5 μm, lorsque le circuit intégré est très dense, c'est-à-dire lorsqu'il comporte de nombreux éléments caractéristiques.

Au cours de la description, on utilisera indifféremment les termes "maille de C.A.O." et "format de C.A.O.".

L'étape 106 de détection des types simples, consiste à déterminer les éléments caractéristiques du circuit intégré à inspecter.

Une observation préalable à la phase 100 de prétraitement, par exemple par un utilisateur, permet d'identifier les différents éléments caractéristiques tels que motifs, parties de motifs ou groupe de motifs, présents sur le circuit intégré. A partir de cette observation visuelle, on définit les éléments caractéristiques respectivement sous forme de masque binaire que l'on utilisera pour extraire, de l'image binaire, des informations relatives à la position desdits éléments caractéristiques ainsi codés.

En effet, les éléments caractéristiques d'un circuit intégré sont, par exemple, un ou plusieurs pixels représentatifs du niveau de gris du fond du circuit (appelés zones uniformes d'un premier type), un ou plusieurs pixels représentatifs du niveau de gris des motifs du circuit (appelé zone uniforme d'une deuxième type), des coins de motifs, des transitions (c'est-à-dire des éléments de la bordure entre le fond et le motif), des éléments particuliers, tels que des cellules mémoire, des trous de contact, etc.

Un calculateur établit des listes dans lesquelles un élément caractéristique représenté généralement par un code est associé à une position. Lorsque cet élément caractéristique est plusieurs fois présent dans le circuit intégré, il est également présent plusieurs fois dans la liste où il est associé à chacune de ses positions. Ces listes sont enregistrées sur le disque dur 6 auquel le calculateur peut accéder à tout moment.

La détection de position des éléments caractéristiques a lieu sur l'image binaire théorique obtenue lors de l'étape 104, totalement exempte de bruit. Elle consiste donc en un simple décodage des configurations correspondant auxdits éléments caractéristiques. Ainsi, l'image binaire est balayée en utilisant une fenêtre, de quelques pixels de côtés. Le contenu de la fenêtre est corrélé avec les éléments caractéristiques codés sous forme de masques. Le contenu de la fenêtre correspond à l'un des éléments caractéristiques recherchés.

La fenêtre présente généralement la même taille que le masque de l'élément caractéristique en cours de recherche.

On crée ainsi, lors de l'étape 106, une image de types simples, c' est-à-dire une image représentative de la position des éléments caractéristiques types dans l'image binaire (ces éléments caractéristiques pouvant être des éléments de fond/motif, des transitions ou encore des coins).

Ces informations de position sont obtenues avec une précision égale à la résolution de la base de données de conception, cette résolution étant généralement supérieure à la résolution d'une image réelle, pour laquelle ladite résolution est donnée par la taille des pixels de la caméra utilisée pour l'acquisition de ladite image réelle. On effectue donc cette détection avec une précision subpixel (c'est-à-dire de l'ordre du sous-pixel) dans la maille de la caméra.

L'étape 108 de détection des types complexes consiste à rechercher, dans l'image de types simples déterminée à l'étape 106, les éléments de type complexe (appelés aussi "macromotifs") par corrélation avec des éléments modèles décrits sous forme de transitions et de coins. En effet, les éléments de type complexe sont généralement d'une taille supérieure à celle des éléments de type simple ; aussi, est-il plus rapide de les rechercher dans l'image de types simples que dans l'image binaire elle-même.

L'étape 110 de compression des données consiste à établir une liste des différents types. Cette liste contient les éléments caractéristiques et leurs positions associées.

Cette liste, ainsi que la largeur théorique d'un motif, sont mémorisées par exemple dans le disque dur 6, d'où les informations contenues dans ladite liste seront lues au moment de la phase 300 de synthèse.

Le codage de l'image de types sous forme de liste permet de condenser les informations contenues dans l'image de types et donc de réduire le volume des données à stocker durant la phase de prétraitement. Cette condensation des informations permet, avantageusement, de réduire le temps de transfert desdites informations.

Dans un autre mode de réalisation, cette liste peut être obtenue directement après l'étape 104 de synthèse de l'image binaire. Le passage par une image de types n'est pas obligatoire et dépend du choix des traitements utilisés pour obtenir la liste type à partir de l'étape 104.

La phase 200 de traitement concerne l'acquisition des images réelles des éléments caractéristiques.

D'une façon générale, lorsque l'image réelle du circuit intégré (ou d'une partie du circuit intégré) est acquise, l'utilisateur y prélève des portions d'images correspondant aux éléments caractéristiques. Ces portions d'images, appelées aussi échantillons, peuvent être des pixels individuels ou groupés, des portions de lignes, des portions de colonnes, etc.

Ces portions d'images sont choisies exemptes de défauts. Pour cela, l'utilisateur sélectionne le circuit à utiliser pour cette phase, au moyen, par exemple, d'un microscope. C'est également l'utilisateur qui choisit, sur ce circuit, les portions de l'image utilisées dans la suite du traitement afin que celles-ci permettent la réalisation d'une image de référence pour tous les circuits à inspecter comportant des éléments du même type.

De façon plus précise, l'acquisition de l'image réelle est effectuée lors d'une étape 202. La sélection de cette image réelle est réalisée, par exemple, à l'aide d'un système d'inspection dans un mode semi-automatique. Ce système d'inspection permet à l'utilisateur effectuant la sélection de l'image réelle de déplacer un champ d'observation sur la surface du circuit intégré. L'utilisateur analyse ainsi la constitution du circuit afin de choisir les éléments caractéristiques qui sont le mieux adaptés. Autrement dit, il recherche un champ du circuit exempt de défaut et contenant les éléments caractéristiques choisis. L'image réelle de ce champ est alors acquise et nommée "image d'apprentissage".

A titre d'exemple d'apprentissage, lorsque le circuit intégré à inspecter n'est pas très dense et qu'il comporte des motifs très variés, l'opération de prélèvement des échantillons concerne les coins et les transitions pris individuellement. Au contraire, lorsque le circuit intégré est dense, l'utilisateur prélève des échantillons de taille plus importante, tels que des motifs complets des cellules mémoires ou des trous de contact. Chaque trou de contact est composé de quatre coins et de quatre transitions, mais ces transitions et coins sont très petits et proches les uns des autres, ce qui nécessite un traitement proche de la limite de résolution. Il est donc préférable, dans le cas d'un circuit intégré très dense, de prélever des échantillons de taille plus importante.

Dans certains cas, il est difficile de déterminer un champ unique contenant tous les éléments caractéristiques exempts de défauts. Selon l'invention, il est alors possible de choisir plusieurs champs, c'est-à-dire plusieurs images d'apprentissage, qui seront traitées l'une à la suite de l'autre.

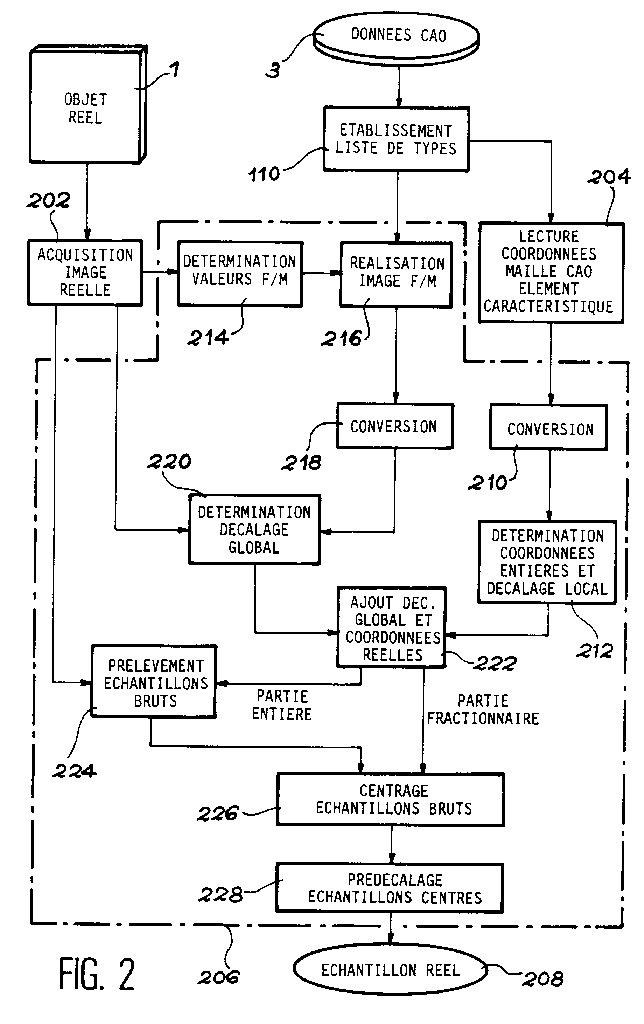

Aussi, cette phase 200 consiste, d'une part, à effectuer l'acquisition de l'image réelle à traiter et, d'autre part, à lire, durant l'étape 204, les coordonnées des éléments caractéristiques contenus dans la liste de types. Des échantillons bruts sont ensuite prélevés sur l'image réelle et traités durant l'opération 206. Le traitement de ces échantillons bruts peut consister en une opération de centrage et une opération de décalage des échantillons en fonction des coordonnées des éléments caractéristiques sur l'image binaire. Cette opération 206 sera décrite plus en détails dans la figure 2. Ces échantillons bruts traités sont alors appelés "échantillons réels" (référence 208).

La phase 300 de synthèse consiste à remplacer dans l'image en cours de synthèse, c'est-à-dire dans l'image de types, les valeurs des pixels par des nouvelles valeurs correspondant à celles des échantillons réels des éléments caractéristiques provenant de la phase 200 de traitement. Cette opération de remplacement par les échantillons réels est effectuée pour chacune des positions détectées en phase 100 de prétraitement.

De façon plus précise, l'étape 310 de lecture de la liste de types consiste à rechercher, dans le disque dur 6, les informations contenues dans cette liste : on effectue une décompression des données (à savoir une opération inverse de celle qui consiste à transformer l'image de types en liste de types) afin de retrouver l'image de types sur laquelle on applique, dans une opération 320, les échantillons réels déterminés durant la phase 200 pour réaliser l'image de référence synthétisée.

Cette opération 320 d'application consiste, par une méthode substitutive, à appliquer les échantillons pris dans l'image d'apprentissage sur les pixels identifiés lors de l'opération 106 de détermination des éléments caractéristiques. A l'issue de cette opération 320, on obtient une image synthétisée comportant des niveaux de gris, comme une image réelle.

Selon un autre mode de réalisation de l'invention, les opérations 310 et 320 peuvent être combinées. Ainsi, l'image de types n'est pas recréée, les échantillons réels étant directement appliqués en fonction des coordonnées obtenues dans la maille capteur par conversion des coordonnées connues dans la maille de C.A.O.

Par opposition à la maille de C.A.O., la maille du capteur est la maille dans laquelle est réalisée l'image réelle, c'est-à-dire la maille (ou le format) des moyens de prise de vues.

La figure 2 représente l'organigramme décrivant de façon plus détaillée l'opération 206 de prélèvement et traitement des échantillons d'image réelle. Sur cette figure, l'objet à inspecter est représenté par la référence 1. Les données issues de la base de données de C.A.O., à partir desquelles est réalisée la phase 100, sont référencées 3. Ces objet à inspecter et les données de C.A.O. sont représentés dans cette figure simplement à titre indicatif pour permettre une meilleure compréhension des étapes qui vont être décrites, leur description détaillée ayant été donnée précédemment.

Il en est de même pour les étapes 110, 202 et 204 qui ont déjà été décrites.

L'étape 206 de prélèvement et de traitement des échantillons comporte des opérations de changement de format. Les coordonnées des éléments caractéristiques, mémorisées dans les listes de types (référence 110), sont définies dans la maille de C.A.O. (ou format de C.A.O.). Ces coordonnées sont donc lues, durant l'opération 204, dans leur format de C.A.O. Les valeurs de ces coordonnées sont entières car elles ont été déterminées directement sur l'image binaire définie, elle aussi, en maille de C.A.O.

Ces coordonnées sont alors converties, lors de l'étape 210, en des coordonnées équivalentes définies dans la maille du capteur. Cette conversion 210 de valeurs de coordonnées entières a pour effet de fournir des valeurs de coordonnées équivalentes décimales. Une opération 212 de détermination des coordonnées équivalentes entières et du décalage local consiste alors à déduire, des valeurs de coordonnées équivalentes décimales, la partie entière et la partie fractionnaire. La partie entière correspond à des coordonnées équivalentes des éléments caractéristiques définies dans la maille capteur. La partie fractionnaire correspond à un décalage local.

Une opération 214 de détermination des valeurs fonds/motifs (notées aussi "valeurs F/M") consiste à réaliser un histogramme des niveaux de gris de l'image réelle obtenue à l'étape 202. Cet histogramme permet d'observer la répartition des niveaux de gris sur l'image réelle. Les niveaux de gris les plus souvent présents sont intégrés à l'image binaire obtenue à l'étape 110 de façon à réaliser une image fonds/motifs (étape 216 du procédé). L'image fonds/motifs ainsi réalisée en 216 est donc une image descriptive à plusieurs niveaux de gris, contrairement à l'image binaire de l'étape 110 qui ne comporte que deux niveaux (blanc et noir). Une telle image fonds/motifs est plus proche de l'image réelle qu'une simple image binaire. Une corrélation entre cette image fonds/motifs et l'image réelle fournira des résultats plus précis.

Cependant, cette image fonds/motifs (F/M) est réalisée dans la maille de C.A.O. Une étape 218 de conversion permet donc de définir cette image F/M dans la maille du capteur. Cette image F/M étant ainsi définie dans la maille du capteur, une opération 220 de corrélation avec l'image réelle définie également dans la maille du capteur peut être réalisée. Cette opération 220 de corrélation permet de déterminer le décalage de l'image réelle par rapport à l'image fonds/motifs. Ce décalage est appelé "décalage global". Il concerne, en effet, le décalage entre deux images, tandis que le décalage local concerne la position d'éléments caractéristiques.

La détermination d'un tel décalage global permet, lorsque l'invention est appliquée à l'inspection de circuits intégrés, d'intégrer directement les effets de sur-gravure ou sous-gravure à l'image de référence grâce à la corrélation entre l'image F/M et l'image réelle sur laquelle apparaissent ces effets de sur ou sous-gravure.

Une opération 222 d'ajout consiste à effectuer la somme des valeurs de décalage global et de coordonnées équivalentes décimales obtenues lors des étapes respectives 220 et 212. La partie entière de cette somme correspond aux coordonnées des échantillons bruts à prélever dans l'image réelle. Les échantillons bruts correspondants à ces coordonnées sont donc prélevés lors d'une opération 224 de prélèvement des échantillons.

La partie fractionnaire de cette somme correspond au décalage de ces échantillons bruts par rapport aux éléments caractéristiques les représentant dans l'image descriptive. Une opération 226 de centrage des échantillons bruts consiste alors à effectuer un décalage subpixel de ces échantillons. Ce décalage est réalisé, par exemple, par une interpolation linéaire et prend en compte la partie fractionnaire de la somme réalisée lors de l'étape 222.

Ces échantillons bruts centrés en 226 sont alors prédécalés lors d'une opération 228 de prédécalage. Cette opération 228 consiste à décaler de façon systématique chacun des échantillons bruts centrés selon une pluralité de valeurs prédéfinies. Ces valeurs prédéfinies sont, par exemple, toutes les valeurs distantes d'un pas de 1/8ème de pixel comprises entre deux valeurs entières de pixel. Selon cet exemple, le nombre de valeurs prédéfinies est de huit.

Lorsque les échantillons bruts traités dans cette étape 228 comportent des motifs bidimensionnels, leur prédécalage est effectué selon les lignes et selon les colonnes. Aussi, pour chaque échantillon brut traité soixante quatre échantillons centrés prédécalés sont obtenus. Tous les échantillons ainsi centrés en 226 et prédécalés en 228 sont mémorisés dans une bibliothèque, elle-même contenue dans le disque dur. Les échantillons qui seront ensuite positionnés sur l'image fonds/motifs sont choisis parmi les échantillons contenus dans la bibliothèque. Ces échantillons choisis sont nommés échantillons réels (référence 208).

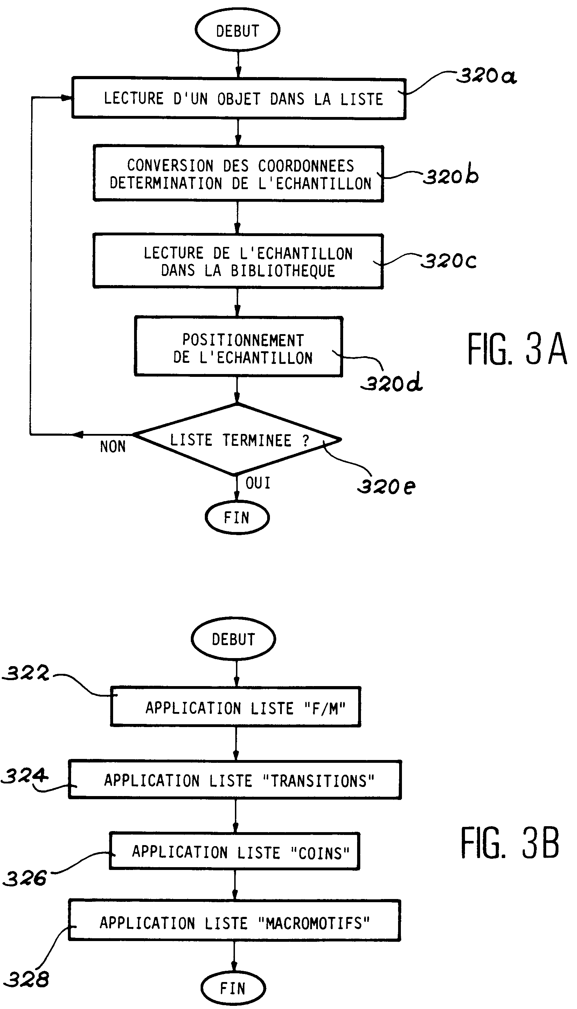

La figure 3B représente le diagramme fonctionnel de l'opération 320 de réalisation de l'image de référence par application des échantillons réels constitués par des zones uniformes, des transitions, des coins et des macromotifs. Cette opération 320 consiste à coller les échantillons réels, prélevés lors de l'étape 200 de traitement, sur les pixels identifiés lors de la phase 106 de détection de types. Comme montré sur la figure, les types fonds/motifs sont les premiers à être appliqués (opération 322). L'image fonds/motifs est alors créée. Sont ensuite appliqués, les types transitions (opération 324), les types coins (opération 326) et les macromotifs (opération 328) pour créer après chaque opération une image comportant les types appliqués lors de ladite opération et des opérations précédentes.

La figure 3A représente, sous forme d'un organigramme, les différentes étapes à réaliser pour appliquer l'un des types suivants : fonds/motifs, transitions, coins ou macromotifs. L'application d'un type consiste en l'opération 320a de lecture, dans la liste de types considérée, d'un élément caractéristique comportant son type et ses coordonnées dans l'image descriptive (donc définies en maille de C.A.O.). Une opération 320b de conversion, permet de convertir les coordonnées de l'élément caractéristique dans la maille capteur à l'aide de la table de conversion décrite précédemment.

La conversion de ces coordonnées de la maille de C.A.O. à la maille du capteur permet également de tenir compte d'un éventuel décalage en rotation de l'image réelle par rapport au repère de l'image descriptive. En effet, il peut exister un décalage en rotation du fait de l'angle :

- l'angle A1 de désalignement en rotation du circuit intégré par rapport à la table sur laquelle il est posé pour être inspecté ;
- l'angle A2 de désalignement en rotation entre les moyens de prise de vues et la table.

La correction de ces désalignements d'angles A1 et A2 est réalisée lors de la conversion des coordonnées de la maille de C.A.O. à la maille du capteur. Cette conversion est donc réalisée en appliquant les expressions suivantes :

$$Xcap.Pxcap = Xcao.Pxcao.cosA - Ycao.Pycao.sinA ;$$

$$Ycap.Pycap = Xcao.Pxcao.sinA + Ycao.Pycao.cosA,$$

où :

- A est l'écart angulaire résultant entre l'image réelle et l'image descriptive ;
- Xcap et Ycap sont les coordonnées lues sur l'image réelle ;
- Xcao et Ycao sont les coordonnées lues sur l'image descriptive ;
- Pxcap et Pycap sont les pas dans la maille capteur selon les directions d'axes X et Y ;
- Pxcao et Pycao sont les pas dans la maille de C.A.O. selon les directions d'axes X et Y.

A partir de ces coordonnées ainsi converties, un couple de valeurs entières et un couple de valeurs fractionnaires sont déterminées. Ce couple de valeurs fractionnaires, ainsi que le type de l'élément caractéristique permettent de déterminer, lors d'une opération 320C de lecture dans la bibliothèque, l'échantillon prédécalé à appliquer sur l'image en cours de synthèse. Cet échantillon choisi est alors positionné, lors de l'opération 320d, sur l'image en cours de synthèse par une méthode substitutive.

Un test 320e de fin de liste est ensuite appliqué. Tant que la liste de types n'est pas terminée (réponse NON au test), les opérations 320a, 320b, 320c, 320d sont répétées pour des éléments caractéristiques chaque fois différents. Lorsque la liste de types est terminée (réponse OUI au test), l'application du type considéré est terminée. L'application du type suivant (voir figure 3B) peut alors être réalisée.

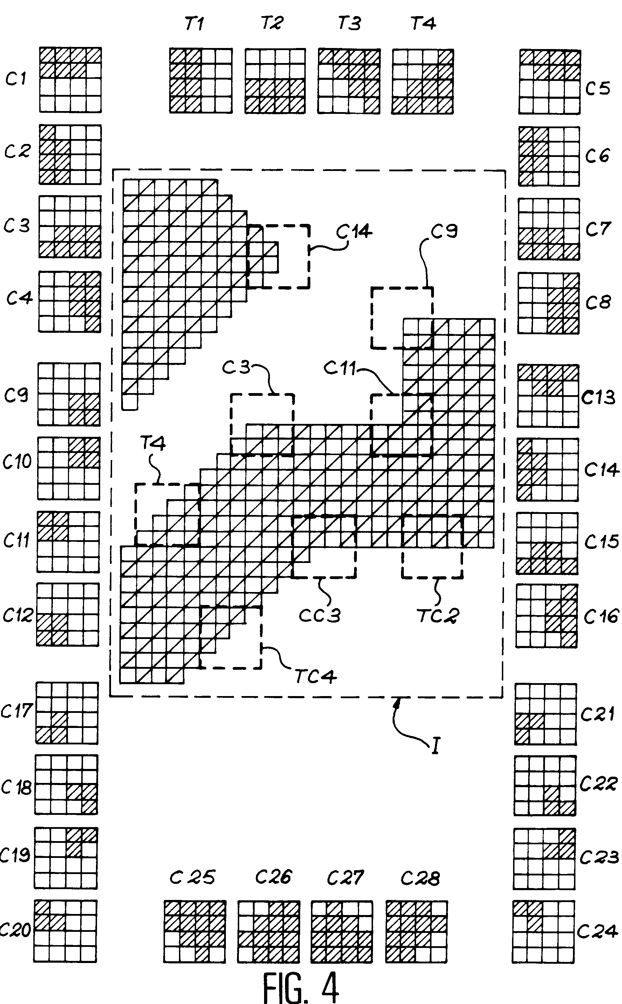

Sur la figure 4, on a représenté un exemple des différents motifs recherchés lors de l'opération de détection de positions. Cette opération consiste à identifier, sur l'image descriptive, les lieux d'application des échantillons réels. Cette détection consiste en un décodage des configurations correspondant aux transitions et aux coins.

En considérant sur une image quatre directions principales (orientées selon des angles de 0°, 45°, 90° et 135°), il y a généralement cinquante six types de coins dont vingt huit sont représentés par les matrices C1 à C28 sur la figure 4, les vingt-huit autres matrices (non représentées) étant les coins complémentaires desdites matrices C1 à C28. On entend par "coins complémentaires", les matrices de coins dans lesquelles les zones claires des coins représentés sur la figure 4 sont des zones grisées lorsqu'il s'agit de coins complémentaires, et inversement.

Il existe alors huit configurations de transitions :

- une transition T1 verticale et sa complémentaire, non représentée ;
- une transition T2 horizontale et sa complémentaire TC2, représentée dans l'exemple d'image I binaire ;
- une transition T3 descendante (pente de 135°) et sa complémentaire ;
- une transition T4 montante (pente de 45°) et sa complémentaire TC4.

Dans la zone pointillée I, on a représenté, en exemple, une image binaire dans laquelle on recherche les différents coins et transitions. Sur cette image binaire, on peut repérer les coins C14, C9 et C3, les coins CC11 et CC3 complémentaires des coins respectifs C11 et C3. On peut également repérer la transition T4 et les transitions TC4 et TC2 complémentaires des transitions respectives T4 et T2.

Selon un mode de réalisation de l'invention, il est possible de limiter le nombre des transitions et coins prélevés lors de l'apprentissage, en utilisant les symétries axiales qui transforment, par exemple, un coin C10 et un coin C11.

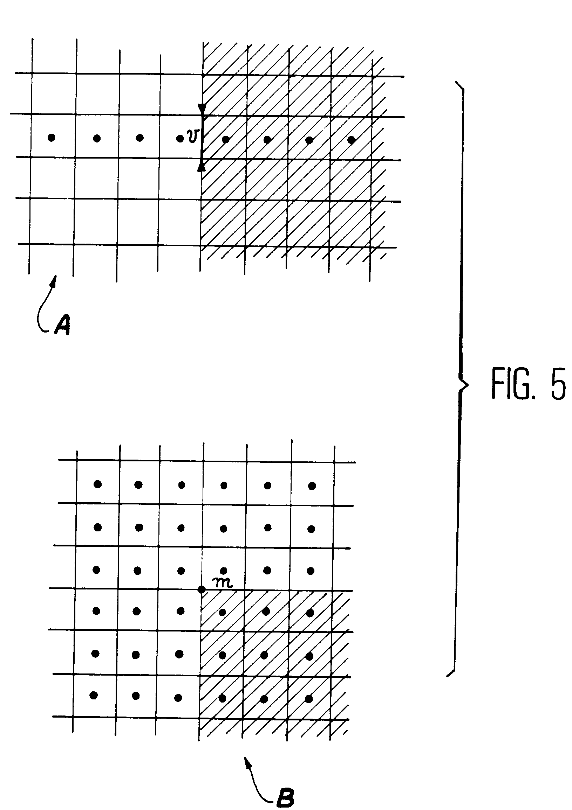

Sur la figure 5, on a représenté une transition sous forme de vecteur de transition et un coin, sous forme de matrice de coin lors du "collage" 320 (appelé aussi "application") des échantillons réels, sur l'image descriptive. Ces vecteurs et matrices sont avantageusement pris respectivement de longueur et de côtés pairs, de façon à repérer aisément le centre dudit vecteur et de ladite matrice.

La zone A de la figure 5 montre un vecteur de centre v, positionné de façon à ce que son centre corresponde à la transition de l'image binaire.

La zone B de la figure 5 montre une matrice de centre m positionnée de façon à ce que son centre corresponde au coin de la matrice binaire.

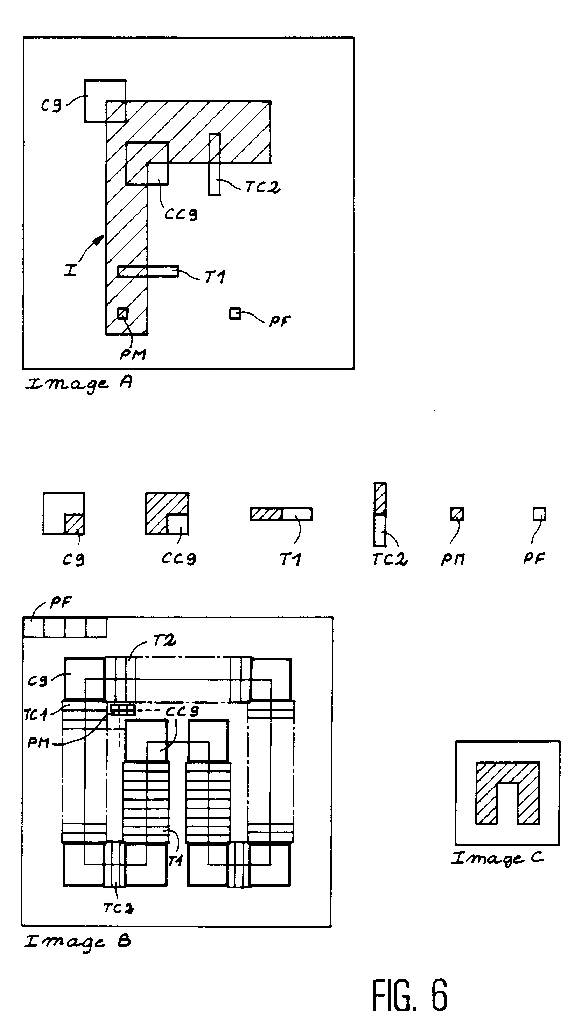

Afin de permettre une meilleure compréhension du procédé qui vient d'être décrit, on a représenté sur la figure 6 un exemple de mise en oeuvre du procédé selon l'invention.

Sur l'image A de la figure 6, on a représenté une image d'apprentissage avec ses éléments caractéristiques, tels que le coin C9, le coin complémentaire CC9, la transition verticale T1, la transition horizontale complémentaire TC2, et les pixels du premier type de zone uniforme PF et du second type de zone uniforme PM.

Sur l'image B de la figure 6, on a représenté l'image obtenue au moment de l'application des échantillons réels sur l'image binaire, en fonction de la liste des positions obtenue dans la phase de prétraitement.

Sur l'image C de la figure 6, on a représenté l'image synthétisée obtenue, image qui sera considérée comme image de référence au moment de l'inspection des objets.

L'exemple de la figure 6 correspond au cas simple d'un circuit peu dense.

## Revendications

1. Procédé de réalisation d'une image de référence synthétisée dans lequel on effectue une prise de vue d'un objet à inspecter et on effectue un traitement d'image de cette vue, caractérisé en ce qu'il consiste, à partir d'une image descriptive de l'objet à inspecter utilisée dans le traitement d'image et définie par un premier format, à effectuer les opérations suivantes :

   a) détermination (110), dans l'image descriptive, d'éléments caractéristiques de l'objet ;
   b) détermination (204) des coordonnées des éléments caractéristiques dans l'image descriptive ;
   c) acquisition (202) d'au moins une image réelle de l'objet définie dans un second format relatif à la prise de vues ;
   d) prélèvement (224), sur l'image réelle de l'objet, d'échantillons contenant chacun l'image réelle d'au moins un élément caractéristique ;
   e) changement de format (210, 212) pour transformer l'image descriptive de l'objet et les coordonnées des éléments caractéristiques définies dans le premier format en une image descriptive équivalente et des coordonnées équivalentes des éléments caractéristiques définies dans le second format ;
   f) centrage (226) des échantillons en fonction des coordonnées équivalentes obtenue lors de l'opération e) de changement de format ;
   g) positionnement (300) des échantillons ainsi centrés sur l'image descriptive équivalente donnée dans le second format.

2. Procédé selon la revendication 1, caractérisé en ce qu'il comporte en outre une opération (220) de décalage global réalisée après l'opération e) de changement de format et consistant à déterminer une valeur de décalage global de l'image réelle de l'objet par rapport à l'image descriptive équivalente, par application d'une corrélation entre lesdites images réelle et descriptive équivalente.

3. Procédé selon l'une quelconque des revendications 1 et 2, caractérisé en ce que l'opération e) de changement de format consiste à déduire des coordonnées équivalentes des éléments caractéristiques obtenues lors de l'opération e) de changement de format, des valeurs entières de coordonnées et des valeurs fractionnaires de décalage local.

4. Procédé selon la revendication 3, caractérisé en ce que l'opération d) de prélèvement d'échantillons consiste tout d'abord à choisir les échantillons dont les coordonnées dans l'image réelle de l'objet correspondent aux valeurs entières de coordonnées obtenues lors de l'opération e) de changement de format.

5. Procédé selon l'une quelconque des revendications 1 à 4, caractérisé en ce qu'il comporte, après l'opération f) de centrage des échantillons, une opération (228) de décalage consistant à décaler les échantillons centrés selon une pluralité de valeurs prédéfinies.

6. Procédé selon la revendication 5, caractérisé en ce que l'opération de décalage consiste en outre à établir une bibliothèque d'échantillons centrés prédécalés, les échantillons à positionner sur l'image descriptive équivalente étant choisis dans ladite bibliothèque.

7. Procédé selon l'une quelconque des revendications 1 à 6, caractérisé en ce que l'opération e) de changement de format consiste à convertir (210) l'image descriptive de l'objet et les coordonnées des éléments caractéristiques du premier format dans le second format à l'aide d'une table de conversion.

8. Procédé selon l'une quelconque des revendications 1 à 7, caractérisé en ce qu'il comporte, entre l'opération c) d'acquisition de l'image réelle de l'objet et l'opération e) de changement de format, une opération (214, 216) de réalisation d'une image de niveaux de gris, cette image de niveaux de gris étant définie dans le premier format et obtenue en introduisant, dans l'image descriptive de l'objet, des niveaux de gris lus sur l'image réelle de l'objet.

FIG. 1

FIG. 2

DEBUT

LECTURE D'UN OBJET DANS LA LISTE — 320a

CONVERSION DES COORDONNEES
DETERMINATION DE L'ECHANTILLON — 320b

LECTURE DE L'ECHANTILLON
DANS LA BIBLIOTHEQUE — 320c

POSITIONNEMENT
DE L'ECHANTILLON — 320d

LISTE TERMINEE ? — 320e

NON

OUI

FIN

FIG. 3A

DEBUT

322 — APPLICATION LISTE "F/M"

324 — APPLICATION LISTE "TRANSITIONS"

APPLICATION LISTE "COINS"
326

APPLICATION LISTE "MACROMOTIFS"
328

FIN

FIG. 3B

11

FIG. 4

12

FIG. 5

Image A

Cg    CCg    T1    TC2    PM    PF

Image B

Image C

# FIG. 6

Office européen
des brevets

**RAPPORT DE RECHERCHE EUROPEENNE**

Numero de la demande
**EP 93 40 2728**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X,P | EP-A-0 538 111 (COMMISSARIAT À L' NERGIE ATOMIQUE) <br> * le document en entier * <br> --- | 1 | G06F15/70 |
| A,D | PROCEEDINGS OF SPIE ,INTEGRATED CIRCUIT METROLOGY,INSPECTION AND PROCESS CONTROL IV,SAN-JOSE,5-6 MARS 1990, vol.1261, BELLINGHAM (US), XP000350610 SUSUMU TAKEUCHI ET AL. 'advanced 5x reticle inspection technologies for ULSI devices' <br> * abrégé * <br> --- | 1 | |
| A | EP-A-0 381 067 (SCHLUMBERGER TECHNOLOGIES) <br> * abrégé * <br> ----- | 1 | |

**DOMAINES TECHNIQUES RECHERCHES (Int.Cl.5)**

G06F

Le présent rapport a été établi pour toutes les revendications

| Lieu de la recherche | Date d'achèvement de la recherche | Examinateur |
|---|---|---|
| LA HAYE | 28 Janvier 1994 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P04C02)